# EUROPEAN PATENT SPECIFICATION

(11) **EP 1 711 664 B1**
(45) Date of publication and mention of the grant of the patent: **13.08.2008**
(21) Application number: 03789680.0
(22) Date of filing: 29.12.2003
(51) Int. Cl.: E04B 1/38, F16B 5/02, A44B 21/00

(54) **A CONSTRUCTION BOARD HAVING A FASTENING MEANS**
BAUPLATTE MIT EINEM BEFESTIGUNGSMITTEL
PANNEAU DE CONSTRUCTION AVEC ELEMENT DE FIXATION

(43) Date of publication of application: 18.10.2006
(73) Proprietor: Karlsson, Per, 310 31 Eldsberga (SE)
(72) Inventor: Karlsson, Per, 310 31 Eldsberga (SE)
(74) Representative: Petri, Stellan
(86) International application number: PCT/SE2003/002105
(87) International publication number: WO 2005/064094

(56) References cited:
- EP-A1- 1 184 577
- WO-A1-90/04695
- SE-C2- 523 004
- US-A- 4 402 116
- US-A- 5 467 571

## Description

### Technical field

The present invention relates to a construction board having a fastening means designed for mounting the construction board, in particular a gypsum board or a plasterboard, on a construction material, such as a metal or wooden stud.

A construction board of this kind is disclosed in document WO-A-90 04 695.

### Background of the invention

Construction boards are used when building ceilings, walls and floors, the boards being mounted on a metal or wooden stud by means of fastening means. The construction boards may be made of different materials, such as wood, plywood or preferably gypsum. Thus, the most required types of screws are gypsum screws adapted for metal and wooden studs, respectively. This has resulted in production of combination screws having specific threads, which may be used when mounting the board on wood as well as on metal due to the specific threads. The number of screws required for fastening a construction board varies depending on the size of the board, but often 40-50 screws are needed for each board.

Different methods exist for mounting the board on the stud with the screws. A usual way is to keep loose screws in a pocket, from which screws one by one are taken out by the installer during the mounting. This method may be hazardous, since the boards are heavy and difficult to handle. Further, when the installer is holding the tool with one hand, i. g. the screwdriver, and takes out the screw from the pocket with the other hand, there is no hand free to hold or support the board. Other problems related to the working environment when using this method are the risk for sticking damages at the moment when screws are taken out from the pocket, and also the risk of allergy due to the frequent contact between the hand and the screws. The latter is a serious health problem that affects many people leading to necessary wearing of gloves, which makes the work further more difficult. In practice two persons are needed for handling and mounting the gypsum boards when using loose screws. The waste of screws, for example screws left into the pocket or screws falling down on the floor, is also a problem.

Another usual method is to utilise a specific tool, into which a strip having screws is inserted. The strip having about 50 screws is then forwardly fed so that one screw at a time is placed in correct position in front of the bit of the screwdriver. This makes it possible to have one hand free to hold or support the board when the other hand handles the screwdriver. However, one problem with screw strips is that the strips form folds, which result in production disturbances. The screw waste may be considerable, since the screw strips often are changed before they are consumed for avoiding a change and thus an interruption in the work, when the worker for the moment is mounting a construction board.

When using another similar method, the screws are placed on a strip rolled up to a roll, which is placed on a device designed for the purpose. This device feeds the screw to a correct position in the same way as described above. However, the problem of these two methods is the difficult handling of the total equipment comprising screwdriver, strip or roll and in some cases the device for the roll. As the screw feeder often is arranged on an extension of the screwdriver, which may have a length of about 0.90 meter, the weight of the roll or strip is obvious. The efficiency of the work is also deteriorated since time is required for the changes of strips or rolls. In addition, the wear of the equipment is large resulting in frequent reparations and hence production disturbances, which may be a considerable total cost together with costs for transportation, delays and additional work.

In practice one hand is used to handle the screwdriver at the methods described above, i. g. one hand is used to hold the tool and to start or stop it, and the other hand is used to guide the tool for correct positioning of the screw into the construction board. Thus there is no free hand to hold the construction board, and therefore one more person is required to perform the mounting in a safe way.

An alternate method regarding screws on a strip is to apply this method together with a wheel supported device, which among other things functions as a support for the construction board, for example when mounting the board as a ceiling. The screwdriver is then mounted into the wheel-supported device, which may be moved across the floor and adjusted to the actual height of the roof. A mirror is provided in level with the eyes of the worker making it possible for him to see the roof without moving his head as a help to decide where to mount the screw. This method assumes that the floor is free from flexes or cables, waste of building materials, screws, etc., and that the floor is coated or covered in some way. Irregularities in the floor involve a large displacement of the position at the roof. This method is only utilised in small extent at building sites due to its limitations. The disadvantages regarding the waste exist also for all three methods.

Screws, strips or rolls and construction boards must be ordered, transported, unpacked and distributed to various building sites regardless which one of the above mentioned methods being used. Every year about 100 million tons of gypsum boards are mounted world wide requiring a very great number of screws, since at least two screws are needed for each kilo of gypsum. To illustrate the extent of the work of mounting gypsum boards, it could for example be mentioned that about 40.000 persons in the United States daily are working full time with such mounting.

### Summary of the invention

The object of the present invention is to remedy the drawbacks mentioned above when mounting construction boards with screws, and to provide a construction board having an integrated fastening means for mounting the board on a construction material.

A more specific object of the invention is to provide a construction board having an integrated fastening means arranged into the construction board before delivery to the building site for eliminating the handling with loose screws, screw strips or rolls at the mounting.

To obtain above mentioned objects the invention provides a construction board having an integrated fastening means for mounting the board on a construction material, such as a metal or wooden stud, comprising a cage arranged into the board and a screw arranged into the cage, which screw is telescopic and which has a dismounted position, or a not extended position, and a mounted position, or an extended position.

Other objects, features and advantages of the present invention will appear from the following detailed description and from the attached drawings.

### Brief description of the drawings

The invention will be described in further detail below with reference to the accompanying drawings, in which
Fig 1 is an enlarged, schematic view of a cross section of a portion of a construction board having a fastening means arranged therein according to the invention, wherein the fastening means comprises a two part telescopic screw, which is shown in a not extended position;
Fig 2 is a cross section according to Fig 1, but with one part of the telescopic screw screwed into a stud; and
Fig 3 is a cross section according to Fig 1, but with the other part of the telescopic screw screwed into the stud.

### Detailed description of the invention

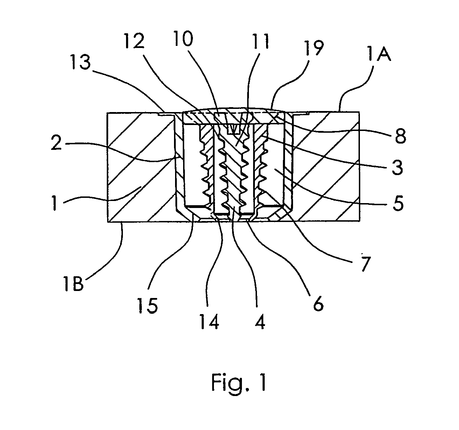

A portion of a construction board 1 having a fastening means arranged therein is schematically shown in Fig 1. The fastening means comprises a cage 2 and a telescopic screw arranged into the cage 2. The screw comprises an inner part 4 (a first part) and an outer part 3 (a second part), and is shown in Fig 1 in a not extended position, wherein the inner part 4 of the screw is mainly located within the outer part 3, which is arranged within the cage 2.

The cage 2 is slightly conical inside and outside, respectively, its diameter being largest at an upper side 1A of the construction board 1 and decreases towards a lower side 1B of the construction board 1. The cage 2, which has a partly or entirely circumferential flange 13, is fixed mounted into the construction board 1 so that the flange 13 lies at the level of and is engaged with the upper side 1A, for example by means of not shown pins or barbs, which are integrated with the flange 13 and thus with the cage 2.

The outer part 3 has external threads 7, and at the top a collar 8 that is arranged mainly at the level of the upper side 1A when the fastening device is in its not extended position. The outer part 3 abuts the inner side of the cage 2 - partly or entirely - for retaining the outer part 3 into the cage 2 by friction. The outer part 3 has a through passage 5, into which the inner part 4 is arranged and which ends into an opening 6.

The inner part 4 is formed as an ordinary screw having a screw head 10 and a stem 11. The stem is conical and tapers into a tip at the end opposite the head 10. A star shaped recess is provided into the screw head 10, which into the not extended position is arranged mainly at the level of the side 1A and which may be kept into this position by a wax layer 19 or by a similar, easily breakable layer. In an alternate embodiment this layer 19 may be omitted. The stem 11 has external threads 12 having the same pitch as the threads 7 of the outer part 3.

The outer part 3 and the inner part 4 are separable connected to each other by means of the wax layer 19, and the outer part 3 is kept into the cage 2 by friction between the collar 8 and the inner side of the cage 2, which layer 19 prevents the fastening means not to fall apart at handling the construction board 1 provided with the fastening means.

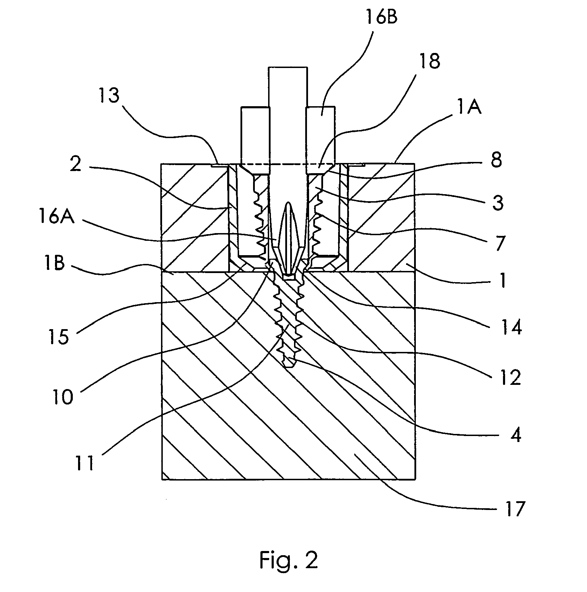

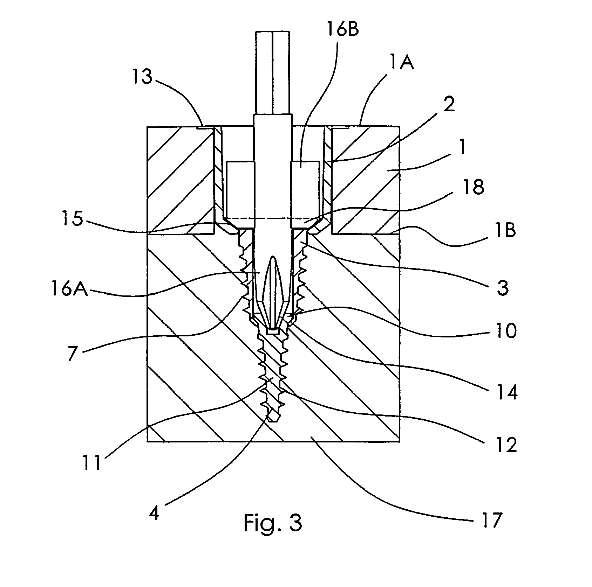

Next will follow a description of the performance at mounting a construction board 1 having a fastening means according to the invention. A tool having a screw driver tip 16A is applied into the star shaped recess in the screw head 10 and is brought to rotate, whereby the inner part 4 - during breaking of the sealing 19 between the outer part 3 and the inner part 4 - is screwed into a construction material 17, such as a metal or wooden stud, into which the construction board 1 is to be mounted, and the stem 11 is passed through the passage 5 of the outer part 3. When the inner part 4 is almost entirely protruded from the outer part 3 according Fig 2 projections on a part 16B of the tool are brought into engagement with corresponding projections 18 on the upper end of the outer part 3, i. e. in the collar 8, to carry on the outer part 3 in the rotation when screwing the board 1 into the stud 17. Optionally the carrier members could be of a different type, but they must be designed so that an engagement by shape is provided between the outer part 3 of the screw and the tool 16B. Also the outer part 3 will now be screwed into the construction material 17. When the outer part 3 has been entirely screwed into this material 17, i. g. with its entire length, the collar 8 abuts an edge 15 of the cage 2 and the head 10 of the inner part 4 abuts an edge 14, which defines the opening 6 as shown in Fig 3, where the edge 15 defines the exit hole of the fastening device 1, whereupon the screw motion is finished when both the parts 3, 4 are screwed into the material 17.

The cage 2 can suitably be made of plastic, preferably of a soft quality, or made of metal for allowing displacement of the collar 8 through the cage 2 to the position shown in Fig 3.

The length of the cage 2 is equal to the thickness of the board 1 according to the embodiment illustrated in Fig 1 and 2. However, it should be understood that the cage 2 also might be shorter according to an alternate embodiment. The opening 6 of the passage 5 may then for example coincidence or fit into a hole arranged into the construction board 1, so that a through going channel is obtained for the screw when mounting it into the construction material 17.

An alternate embodiment can include a cage 2 with a telescopic screw mounted therein comprising more than two parts.

The construction board 1 having the integrated fastening means according the invention allows the screw to be correctly positioned without using any apparatus for measurements. When using current technology often one or more additional screws are used beside the first one mounted, if there is a risk that the first screw has been mounted incorrect, resulting in more screws than necessary are used.

A great advantage of the invention is the environmental gain.

## Claims

1. A construction board (1) having an integrated fastening means for mounting the construction board (1) on a construction material (17), for example a metal or wooden stud, comprising a cage (2) arranged into the construction board (1) and a screw arranged into the cage (2), **characterized in that** the screw is telescopic and has a dismounted position, or a not extended position, and a mounted position, or an extended position.

2. A construction board (1) according to claim 1, **characterized in that** the telescopic screw comprises two parts (3, 4) having threads with the same pitch, of which the first part (4) is telescopically received into the second part (3).

3. A construction board (1) according to claim 2, **characterized in that** the both parts (3, 4) of the telescopic screw are formed with carrier members (18) for engagement with a tool (16A, 16B) for screwing the both parts (3, 4) into the construction material (17).

4. A construction board (1) according to claim 3, **characterized in that** the carrier members (18) consists of projections (18) on the said second part (3) for engagement with the tool (16B) after principally complete screwing of the said first part (4) into the construction material (17).

5. A construction board (1) according to one of the claims 1-4, **characterized in that** the said first part (4) is formed with a head (10) that abuts against a shoulder (14) into the said second part (3) after being screwed into a construction material (17).

6. A construction board (1) according to one of the claims 1-5, **characterized in that** the said second part (3) has a collar (8) that will abut a shoulder (15) into the cage (2) after the said second part has been screwed into the construction material (17).

## Patentansprüche

1. Bauplatte (1) mit einem eingegliederten Befestigungsmittel zum Anbringen der Bauplatte (1) an einem Baumaterial (17), beispielsweise einem Metall- oder Holzpfosten, umfassend einen Korb (2), der in der Bauplatte (1) angeordnet ist, und eine Schraube, die in dem Korb (2) angeordnet ist, **dadurch gekennzeichnet, dass** die Schraube teleskopierbar ist und eine nicht angebrachte Stellung, oder eine nicht ausgefahrene Stellung, und eine angebrachte Stellung, oder eine ausgefahrene Stellung, aufweist.

2. Bauplatte (1) nach Anspruch 1, **dadurch gekennzeichnet, dass** die Teleskopschraube zwei Teile (3, 4) mit Gewinden mit derselben Steigung umfasst, von denen das erste Teil (4) teleskopierbar in dem zweiten Teil (3) aufgenommen ist.

3. Bauplatte (1) nach Anspruch 2, **dadurch gekennzeichnet, dass** die beiden Teile (3, 4) der Teleskopschraube mit Halterungselementen (18) zum Angreifen mit einem Werkzeug (16A, 16B) zum Einschrauben der beiden Teile (3, 4) in das Baumaterial (17) ausgebildet sind.

4. Bauplatte (1) nach Anspruch 3, **dadurch gekennzeichnet, dass** die Halterungselemente (18) aus Vorsprüngen (18) auf dem zweiten Teil (3) zum Angreifen mit dem Werkzeug (16B) nach dem grundsätzlich vollendeten Einschrauben des ersten Teils (4) in das Baumaterial (17) bestehen.

5. Bauplatte (1) nach einem der Ansprüche 1 bis 4, **dadurch gekennzeichnet, dass** das erste Teil (4) mit einem Kopfstück (10) ausgebildet ist, das nach dem Einschrauben in ein Baumaterial (17) an eine Schulter (14) in dem zweiten Teil (3) angrenzt.

6. Bauplatte (1) nach einem der Ansprüche 1 bis 5, **dadurch gekennzeichnet, dass** das zweite Teil (3) ein Ansatzstück (8) aufweist, das nach dem Einschrauben des zweiten Teils in das Baumaterial (17) an eine Schulter (15) in dem Korb (2) angrenzt.

## Revendications

1. Panneau de construction (1) présentant un moyen de fixation intégré pour monter le panneau de construction (1) sur un matériau de construction (17), par exemple un montant en métal ou en bois, comprenant une cage (2) agencée dans le panneau de construction (1) et une vis agencée dans la cage (2), **caractérisé en ce que** la vis est télescopique et présente une position démontée, ou une position non étendue, et une position montée ou une position étendue.

2. Panneau de construction (1) selon la revendication 1, **caractérisé en ce que** la vis télescopique comprend deux parties (3, 4) présentant des filetages avec le même pas, la première partie (4) étant reçue de manière télescopique dans la seconde partie (3).

3. Panneau de construction (1) selon la revendication 2, **caractérisé en ce que** les deux parties (3, 4) de la vis télescopique sont formées avec des éléments de support (18) pour venir en prise avec un outil (16A, 16B) permettant de visser les deux parties (3, 4) dans le matériau de construction (17).

4. Panneau de construction (1) selon la revendication 3, **caractérisé en ce que** les éléments de support (18) sont constitués de saillies (18) sur ladite seconde partie (3) de manière à venir en prise avec l'outil (16B) après le vissage principalement complet de ladite première partie (4) dans le matériau de construction (17).

5. Panneau de construction (1) selon l'une quelconque des revendications 1 à 4, **caractérisé en ce que** ladite première partie (4) est formée avec une tête (10) qui vient en butée contre un épaulement (14) dans ladite seconde partie (3) après avoir été vissée dans un matériau de construction (17).

6. Panneau de construction (1) selon l'une quelconque des revendications 1 à 5, **caractérisé en ce que** ladite seconde partie (3) présente un collet (8) qui vient en butée contre un épaulement (15) dans la cage (2) après que ladite seconde partie a été vissée dans le matériau de construction (17).
